# EUROPEAN PATENT APPLICATION

(11) **EP 3 125 222 A1**
(43) Date of publication of application: **01.02.2017**
(21) Application number: 16466010.2
(22) Date of filing: 27.07.2016
(51) Int. Cl.: G09F 9/33, G02B 27/09, G02B 19/00, F21V 7/04, F21V 7/00, F21V 8/00, F21Y 113/10, F21Y 115/10

(54) **OPTICAL ELEMENT FOR A VARIABLE-MESSAGE SIGN**

(30) Priority: 28.07.2015 CZ 20150524
(71) Applicant: Eltodo, a.s., 14200 Prague 4 (CZ); Ustav fyziky plazmatu AV CR, v.v.i., 18200 Praha (CZ)
(72) Inventor: Kalous, Petr, 15500 Prague 5 (CZ); Lédl, Vít, 46312 Liberec (CZ); Melich, Radek, 46822 Lisný Zelezný Brod (CZ); Pintr, Pavel, 43801 Zatec (CZ)
(74) Representative: Loskotová, Jarmila

(57) **Abstract**

Optical component for variable message signs consisting of RGB LED diode (1) of SMD type as a source of three mono-frequency radiations, further of an area (14) following this diode (1) of coaxially arranged lightguide (2) and of a behind the lightguide (2) following coaxially arranged optical lense (3) where the optical lens (3) is placed on the reversed side of the diode (1) and made as astigmatic, includes the lightguide's (2) body which is made of a quadrilateral input pyramid (11) and truncated quadrilateral output pyramid (12) which are mutually firmly connected by apex surfaces of identical cross-section where the height of the input pyramid (11) is at least 1,2 mm and at the same time lower than the height of the output pyramid (12), the vertex angle of the input pyramid (11) is acute and the vertex angle of the output pyramid (12) is acute.

## Description

### The field of technology

The invention concerns optical component for use in traffic management variable message signs and variable traffic signs in composition into matrix with more light dots.

### The prior art

In the traffic field, variable traffic message signs use many optical components with light emitting diodes (LED) as light sources in connection with optical lenses and other components directing the light rays.

Similar solution has been described in CZ PV 2015-434 where the lightguide is created in the shape of a truncated hexagon with the vertex angle of 14° changing on both ends into regular hexagons and on the other end of the lightguide an optical lens is placed which is formed by two curved surfaces where the first curved surface, for example made as rotary surface, is placed on that side of the optical lens facing the lightguide and the other curved surface placed on the side of the optical lens reversed from the lightguide is created as astigmatic according to CZ UV 22619. Between the first curved surface of the optical lens and the output surface of the lightguide there is an air gap. The light source - RGB LED diode, the lightguide and the optical lens are coaxially arranged. Coaxiality of the optical components is ensured by cases which are these inserted into.

The resulting colour of light from the light source is except red, green and blue, a mixture of at least two mono-frequency radiations of same or different intensity. So that the resulting colour of light emerging from the optical component would be equally distributed into requested beam angles the individual mono-frequency radiations have to be mixed. The lightguide therefore serves as a transfer of mono-frequency radiation from the RGB LED's chips onto the optical lens. The main task of the lightguide is to distribute the light energy emitted by the RGB chips equally onto the output surface of the lightguide and therefore the lightguide is made as a truncated hexagon with the vertex angle of 14° changing at the beginning and the end into regular hexagons.

The mono-frequency radiations emitted by the RGB LED's chips enter the lightguide and part of the rays pass directly through the lightguide on its output surface. Rays with the vertex angle of up to 18° pass through the lightguide onto its output surface; other rays are reflected by the plane surfaces of the truncated as well as regular hexagons. The incidence angle of all rays is always bigger than 42°, they are totally reflected and the hexagon's walls serve as mirrors. Inside the lightguide, multiple reflections occur during which the image of each light-emitting chip always becomes a mirror image around the plane connecting the vertices of the hexagon. This results in the mono-frequency radiation being equally distributed on the output surface of the lightguide.

Depending on the incidence angles, these rays are reflected and hit directly the output surface of the lightguide or the opposite surface where they are reflected again. This results in the output surface of the lightguide emitting rays of mono-frequency radiation directly as well as reflected around the three planes connecting the hexagon's vertices. The input surface of the lightguide is placed directly on the casing of the RGB LED's chips. Thus dust precipitation on the output surface of the RGB LED and the input surface of the lightguide is prevented.

### The gist of invention

Optical component for variable message signs consisting of RGB LED diode of the SMD type as a source of three mono-frequency radiations, further consisting of a lightguide coaxially placed behind the diode and the lightguide being coaxially followed by optical lens where the optical lens is arranged on the reversed side of the diode and made as astigmatic, is characterized in that the body of the lightguide consisting of a truncated quadrilateral input pyramid and truncated quadrilateral output pyramid which are firmly connected by apex surfaces of identical cross-section where the height of the input pyramid is at least 1,2 mm and at the same time it is lower than the height of the output pyramid, further the vertex angle of the input pyramid is acute and where the vertex angle of the output pyramid is acute.

The height of the input pyramid 1,2 mm is defined by simulation of rays tracing given by optical composition and it is exactly the length of 1,2 mm of the truncated quadrilateral pyramid which enables the basic uniform mixture of colours of three mono-frequency components of the RGB LED diode of the SMD type. Therefore the length of the input truncated quadrilateral pyramid must be 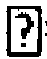 = 1,2 mm.

The optical lens is in the optical component coaxially placed and it has the shape of the cross-section of the quadrilateral pyramid and its surface facing the lightguide is made flat and the surface reversed from the lightguide is made as convex and astigmatic. The optical lend is locked to the lightguide at the area of the output pyramid's base by identical shape of the contact surfaces of the optical lens and the lightguide.

The shape of the truncated quadrilateral pyramidal lightguide and the lens is given by the shape of the RGB LED diode. It is exactly this shape that enables the light to be correctly led into the lightguide and its primary mixture. Leading the light into the lightguide minimizes losses of light's intensity at the light's entering the lightguide. Therefore it is necessary to keep the input angle α between 150° and 70°. According to simulation, if the angle α is smaller than 70°, the light tends to lead out of the lightguide which increases intensity loss.

The output quadrilateral pyramid is again solved based on the simulation of rays tracing by optical surface. The output angle P therefore has to be between 90° and 150° according to the dimensional demands of frontal directional optics.

The shape of the optical lens is simultaneously designed so that sun rays that hit the lens are after passing it diverted on the first fracture surface out of the lightguide.

The optical component is thus designed so that the rear inner space of the RGB LED diode's contact with the lightguide and the frontal inner space of the lightguide's contact with the optical lens are separated by a heat shield surrounding the lightguide. The heat shield creates isolation and prevents the electronics of the optical component from overheating.

Advantages of this solution are minimizing the intensity losses of light entering the lightguide and thus reaching high light output upon exiting. The vertex angles and profiles of the lightguide's pyramids enable easy mixing of R, G, B light with uniform intensity distribution and uniform decomposition of white light on the frontal side of the directional optics. The optical component is designed with the possibility of easy production and mechanical replacement of a damaged part.

Solution according to the invention corresponds with the demands given by the norm CSN EN 12966 concerning the angles of radiation as well as the values of brightness measured in the referential axis, or in the limits of the respective class of radiation angles.

### Figures overview

Optical component according to the invention is depicted on the attached images. Fig.1 shows an example of conceivable embodiment of the lightguide, Fig.2 shows the lens, Fig.3 and Fig.4 shows the composition of a complete optical component with individual parts and Fig.5 shows the diagram of input and output angle of the waveguide including the passing of light rays through the optical component.

### Example of the invention embodiment

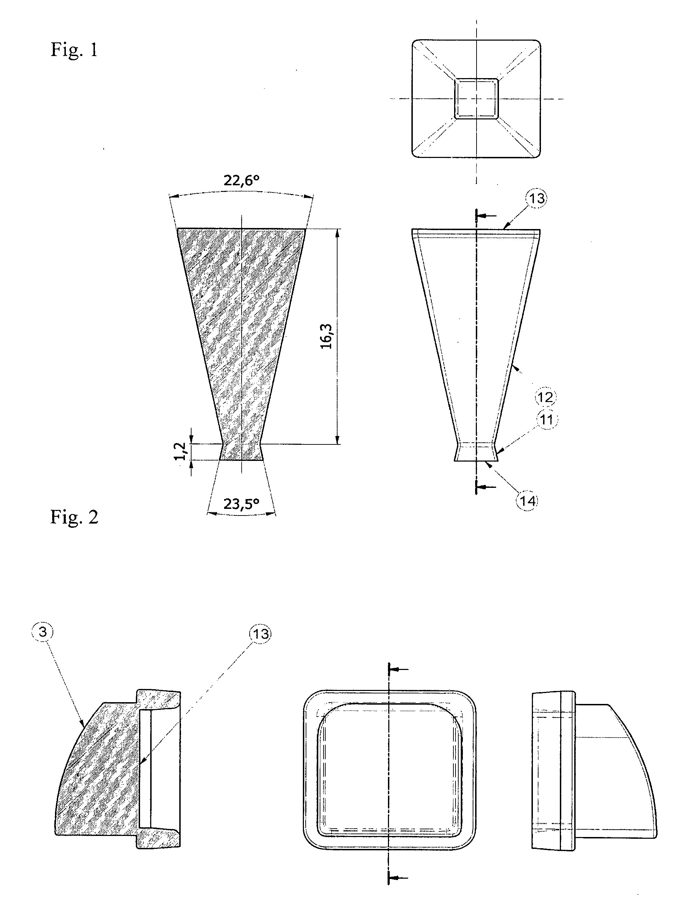

Optical component for variable message signs, figured in Fig.1 - 4, includes light composition made of light source RGB LED diode 1 of SMD type, the body of lightguide 2 and the optical lens 3. The lightguide 2 is represented by truncated quadrilateral input pyramid 11 and a truncated quadrilateral output pyramid 12 which are firmly connected by apex surfaces of identical cross-section where the height of the input pyramid 11 is 1,2 mm and the height of the output pyramid 12 is 16,3 mm. The vertex angle of the input pyramid 11 is 23,5° and the vertex angle of the output pyramid 12 is 22,6°.

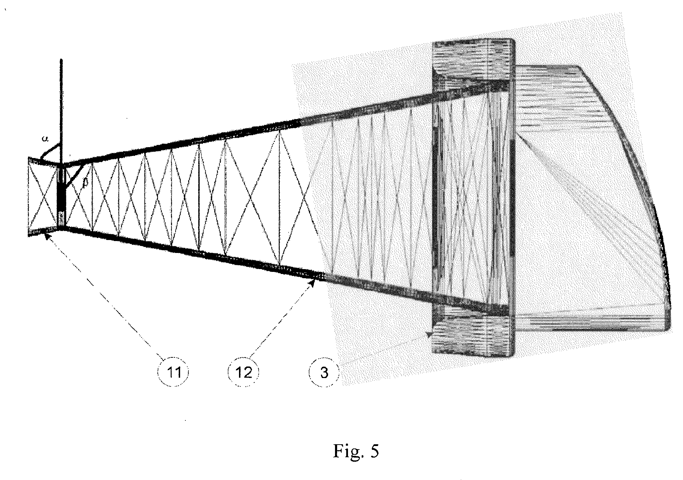

The height 1,2 mm of the input pyramid 11 was defined by simulation of rays tracing given by the optical composition according to Fig.5. Its value is a result of dimensional demand that the whole composition must not exceed the length of 25 mm. It is the height 1,2 mm of the truncated quadrilateral input pyramid 11 that enables basic uniform mixture of colour of three mono-frequency components of the RGB LED diode 1 of the SMD type and therefore it has to be 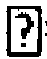 = 1,2 mm.

The shape of the truncated quadrilateral pyramidal lightguide 2 is defined by the shape of the RGB LED diode 1. It is exactly this shape that enable correct leading of light into the lightguide 2 and its primary mixture. The leading of light in the lightguide 2 minimizes intensity losses at the light's entry into the lightguide 2. Therefore it is necessary to keep the input entry angle α between 150° and 70°- According to the simulation, angles lower than 70° cause leading of the light from the lightguide 2 and increase of intensity losses (see Fig. 5).

The quadrilateral output pyramid 12 was again solved with the help of rays tracing simulation by optical surface. The output angle β therefore has to have values between 90° and 150° according to demands of frontal directional optics. The demand was defined as the optical diameter of 10 mm of the frontal directional optics which corresponds with the angle P = 102°.

The optical lens 3 is placed on the axis of the optical component and is produced with the cross-section of a tetrahedral prism wherein its surface 13 facing the lightguide 2 is made as flat and the surface reversed from the lightguide 2 is made as convex and astigmatic. The optical lens 3 is locked to the lightguide 2 in the area of the surface 13 facing the lightguide 2 at the base of the output pyramid 12 with identical shape of the optical lens' 3 and the lightguide's 2 contact surfaces.

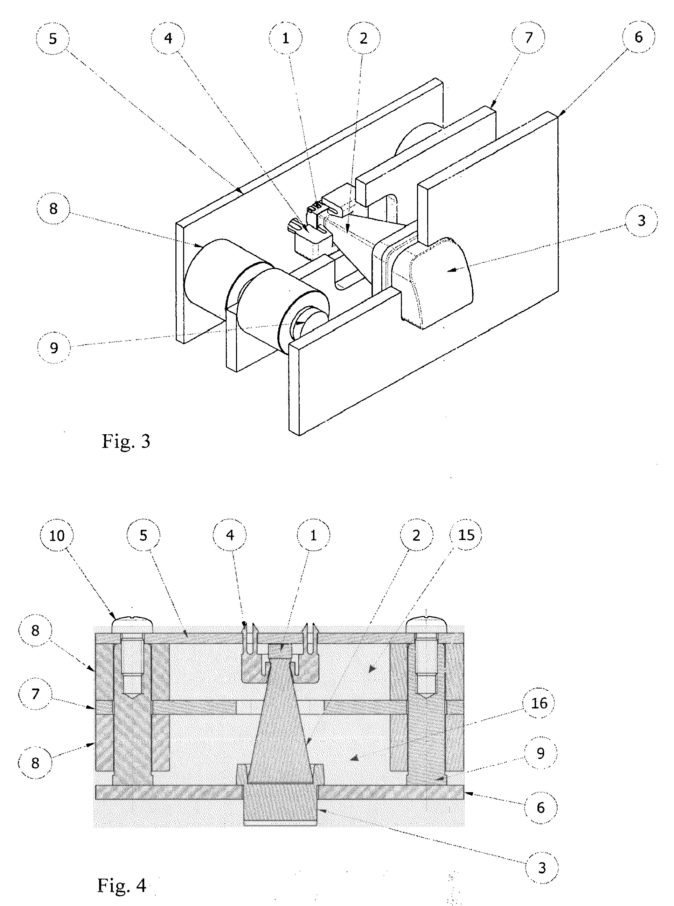

Composition of the optical component is displayed in Fig. 3 and Fig. 4 where the matrix 6 of the message sign is made of metal sheet AlMg3 of 2 mm width. Into the matrix 6 optical lenses 3 are sealed and spacers 9 are welded on it which are used for attachment of a PCB board 5. On the PCB 5 RGB LED diodes 1 are sealed by SMD technology. The connection between the lightguide 2 and the LED diode 1 is ensured by connective casing 4 which is attached to the PCB board 5 and develops an axial power which presses the lightguide 2 to the LED diode 1. Onto the spacers 9, spacer rollers 8 are placed between which a heat shield 7 is inserted which diminishes heat radiation of the matrix 6 and protects thus the LED diodes 1 and other electronic components set onto the PCB board 5 from overheating. For attaching the PCB board 5 to the matrix 6 screws 10 are used which are screwed into the threads of the spacers 9.

### Industry applicability

Optical component according to this technical solution can be used above all in the traffic field for variable message signs and traffic signs with matrix arrangement of full-chromatic dots.

## Claims

1. Optical component for variable message signs consisting of RGB LED diode (1) of SMD type as a source of three mono-frequency radiations, further of an area (14) following this diode (1) of coaxially arranged lightguide (2) and of a behind the lightguide (2) following coaxially arranged optical lense (3) where the optical lens (3) is placed on the side reversed from the diode (1) and made as astigmatic **characterized by** that the lightguide (2) consisting of a truncated quadrilateral input pyramid (11) and truncated quadrilateral output pyramid (12) which are mutually connected by apex surfaces of identical cross-section where the height of the input pyramid (11) is at least 1,2 mm and at the same time it is lower than the height of the output pyramid (12), where the vertex angle of the input pyramid (11) is acute and the vertex angle of the output pyramid (12) is acute.

2. Optical component according to claim 1 **characterized by** that the coaxially arranged optical lens (3) being produced with the cross-section of a tetrahedral prism wherein its surface (13) facing the lightguide (2) is created as flat and the surface reversed from the lightguide (2) is made as convex and astigmatic.

3. Optical component according to claim 1 **characterized by** that the optical lens (3) being in the surface area (13) facing the lightguide (2) self-locked to the base of the lightguide's (2) output pyramid (12) through identical shape of the contact surfaces of the optical lens (3) and the lightguide (2).

4. Optical component according to claim 1 **characterized by** that the rear inner space (15) of the RGB LED diode's (1) contact with the lightguide (2) and the front inner space (16) of the lightguide's (2) contact with the optical lens (3) being separated by a heat shield (7) surrounding the lightguide (2).
